# EUROPÄISCHE PATENTANMELDUNG

(11) **EP 1 747 977 A1**
(43) Veröffentlichungstag der Anmeldung: **31.01.2007**
(21) Anmeldenummer: 05016405.2
(22) Anmeldetag: 28.07.2005
(51) Int. Cl.: B62D 29/00, B26F 1/44, B29C 44/14

(54) **Verfahren zum Herstellen eines geschäumten Bauteils und Schäumwerkzeug zur Anwendung dieses Verfahrens**

(71) Anmelder: ArvinMeritor GmbH, 63128 Dietzenbach (DE)
(72) Erfinder: Ludwig, Matthias, 38159 Vechelde (DE); Beck, Herbert, 38302 Wolfenbüttel (DE); Batke, Harald, 38539 Müden (DE); Niebuhr, Frank, 38518 Wilsche (DE); Langhoff, Hans-Joachim, 38518 Gifhorn (DE); Hardel, Sven, 29386 Wettendorf (DE); Niesner, Tobias, 38518 Gifhorn (DE)
(74) Vertreter: Kitzhofer, Thomas

(57) **Zusammenfassung**

Ein Verfahren zum Herstellen eines geschäumten Bauteils, insbesondere eines Karosserieanbauteils für ein Fahrzeug umfaßt folgende Schritte:
- Bereitstellen eines Schäumwerkzeugs mit einem Werkzeugunterteil (18) und einem Werkzeugoberteil (20),
- Einlegen einer Außenhaut (12) in das Werkzeugunterteil (18),
- Aufbringen eines schäumfähigen Materials, und
- Zusammenfahren des Schäumwerkzeugs, wobei sich wenigstens ein Abschnitt der Außenhaut (12) in einem Spalt (28) zwischen dem Werkzeugunterteil (18) und dem Werkzeugoberteil (20) befindet und die Außenhaut (12) nach dem Schäumvorgang beim Öffnen des Schäumwerkzeugs durch das Schäumwerkzeug selbst beschnitten wird. Ferner betrifft die Erfindung ein Schäumwerkzeug zur Anwendung dieses Verfahrens.

## Beschreibung

Die Erfindung betrifft ein Verfahren zum Herstellen eines geschäumten Bauteils, insbesondere eines Karosserieanbauteils für ein Fahrzeug und ferner ein Schäumwerkzeug zur Anwendung dieses Verfahrens.

Karosserieanbauteile für ein Fahrzeug sind solche Teile, die an der Fahrzeugkarosserie angebracht werden, die die Außenhaut des Fahrzeugs im fertig montierten Zustand wenigstens abschnittsweise definieren und von außen sichtbar sind. Karosserieanbauteile können Klappen (Türen, Deckel), Stoßfänger oder Dachmodule sein, worunter auch Dachmodule mit Schiebedacheinheit fallen.

Geschäumte Karosserieanbauteile, insbesondere Dachmodule, mit einem glasfaserverstärkten PU-Material sind bereits bekannt, wobei die Glasfasern beispielsweise im sogenannten LFI- (Long Fiber Injection) Verfahren in den Kunststoff eingeschossen werden. Eine tiefgezogene Folienaußenhaut, die aus Kunststoff oder Aluminium besteht und eine Dicke von 0,5 bis 2 mm hat, wird dabei in ein Schäumwerkzeug eingelegt und hinterschäumt. Nach dem Ausschäumen des PU-Materials muß das Karosserieanbauteil aus dem Schäumwerkzeug entfernt und durch Fräsen oder einem Wasserstrahl randseitig beschnitten werden, um überschüssiges Material zu entfernen und einen maßgenauen Schneidrand Schnittkante herzustellen. Das Beschneiden des Karosserieanbauteils erfolgt in einem separaten Arbeitsschritt und ist deswegen teuer.

Die Aufgabe der Erfindung besteht darin, ein Verfahren zur Herstellung eines geschäumten Bauteils und ein Schäumwerkzeug zur Anwendung eines solchen Verfahrens bereitzustellen, so daß das Bauteil kostengünstig und einfach hergestellt werden kann.

Dies wird durch ein erfindungsgemäßes Verfahren zum Herstellen eines geschäumten Bauteils, insbesondere eines Karosserieanbauteils für ein Fahrzeug erreicht, das folgende Schritte aufweist:
- Bereitstellen eines Schäumwerkzeugs mit einem Werkzeugunterteil und einem Werkzeugoberteil,
- Einlegen einer Außenhaut in das Werkzeugunterteil,
- Aufbringen eines schäumfähigen Materials, und
- Zusammenfahren des Schäumwerkzeugs, wobei sich wenigstens ein Abschnitt der Außenhaut in einem Spalt zwischen dem Werkzeugunterteil und dem Werkzeugoberteil befindet und die Außenhaut nach dem Schäumvorgang beim Öffnen des Schäumwerkzeugs durch das Schäumwerkzeug selbst beschnitten wird.

Die Außenhaut, die z.B. eine tiefgezogene Folie aus Kunststoff oder Aluminium ist und eine Dicke von 0,5 bis 2 mm hat, wird in eine Schäumkammer, die eine Hohlkammer zwischen dem Werkzeugunterteil und dem Werkzeugoberteil ist, gelegt und verläuft dann wenigstens in einem Abschnitt in einem Spalt zwischen dem Werkzeugunterteil und dem Werkzeugoberteil. Beim Öffnen des Schäumwerkzeugs wird die Außenhaut durch das Schäumwerkzeug selbst beschnitten, indem ein Teil des Schäumwerkzeugs einen Schneidrand aufweist. Es ist also kein nachträgliches Beschneiden der Außenhaut notwendig, so daß das Herstellungsverfahren des Karosserieanbauteils einfacher und billiger ist. Falls sich in dem Spalt zwischen dem Werkzeugunterteil und dem Werkzeugoberteil Schäummaterial befindet, wird dieses ebenfalls beim Öffnen des Schäumwerkzeugs beschnitten.

Die Erfindung läßt sich genausogut bei einem Spritzwerkzeug anwenden, und das Karosserieanbauteil könnte gespritzt sein.

Vorzugsweise weist eines der Werkzeugteile eine Schneidkante auf, wobei die Außenhaut durch diese Schneidkante beschnitten wird. Beim Öffnen des Schäumwerkzeugs, also einem Verstellen eines der Werkzeugteile, z.B. des Werkzeugoberteils in Öffnungsrichtung, wird die Außenhaut und gegebenenfalls ein ausgehärtetes Schäummaterial, das in dem Spalt zwischen dem Werkzeugunterteil und dem Werkzeugoberteil ist, durch diese Schneidkante beschnitten.

Bevorzugt ist die Schneidkante auswechselbar. Bei der Schneidkante handelt es sich um ein Verschleißstück, das Teil eines Schneideinsatzes ist. Beim Verschleiß muß nicht das gesamte Werkzeugteil ersetzt werden, sondern nur ein neuer Schneideinsatz an dem Werkzeugteil angebracht werden.

Vorzugsweise ist die Abstützfläche auswechselbar. Die Abstützfläche ist ein Verschleißteil.

Die Außenhaut wird z.B. zwischen einer Abstützfläche an einem Werkzeugteil und der Schneidkante am anderen Werkzeugteil beschnitten.

Vorzugsweise liegen die Schneidkante und ein äußerer Rand der Abstützfläche im geschlossenen Zustand des Schäumwerkzeugs im wesentlichen in Öffnungsrichtung übereinander. Beim Öffnen des Schäumwerkzeugs werden der äußere Rand der Abstützfläche und die Schneidfläche nahe aneinander vorbeibewegt, so daß nur noch ein minimaler Spalt zwischen der Schneidkante und dem äußeren Rand der Abstützfläche verbleibt, der einen geradlinigen Schneidrand ohne überstehendes, überschüssigem Material garantiert.

Eines der Werkzeugteile hat z.B. einen Fortsatz, um den der Abschnitt der Außenhaut gelegt wird, der an einen Schneidrand angrenzt, wobei der Schneidrand beim Beschneiden der Außenhaut erzeugt wird.

Die Schneidkante befindet sich bevorzugt im Bereich des Fortsatzes. Falls die Schneidkante auswechselbar ausgebildet ist, kann auch der Fortsatz auswechselbar ausgeführt sein.

Gemäß einer bevorzugten Ausführungsform hat eines der Werkzeugteile einen Schieber, der die Abstützfläche oder die Schneidkante aufweist. Der Schieber ist quer zur Öffnungsrichtung verschiebbar, um ein Einlegen der Außenhaut zu ermöglichen und nach dem Einlegen der Außenhaut die Flächen an den Werkzeugteilen, zwischen denen die Außenhaut später geschnitten wird, nahe aneinander zu bringen.

Vorzugsweise weist eines der Werkzeugteile angrenzend an den Fortsatz einen Hinterschnitt auf, entlang dem sich die Außenhaut bis zum Spalt erstreckt. Der Hinterschnitt und der Fortsatz können dabei so ausgebildet sein, daß schäumfähiges Material in den Bereich zwischen dem Hinterschnitt und dem Fortsatz einfließen kann und sich somit nach dem Schäumen ausgehärtetes Material und die Außenhaut in dem Spalt befinden, die dann gemeinsam beschnitten werden. Der Spalt ist Teil der Schäumkammer, die als Hohlraum zwischen dem Werkzeugoberteil und dem Werkzeugunterteil definiert ist und auch der Entlüftung dient.

Die Außenhaut wird bevorzugt im Bereich des Spaltes zwischen dem Werkzeugoberteil und dem Werkzeugunterteil geklemmt. Die Außenhaut wird von dem einen Bauteil (z.B. Werkzeugunterteil) gegen ein zweites Bauteil (z.B. Werkzeugoberteil) gedrückt, so daß wenig Schäummaterial zwischen Außenhaut, Werkzeugunterteil und Werkzeugoberteil definiert austreten kann.

Das erfmdungsgemäße Schäumwerkzeug zur Anwendung dieses Verfahrens hat ein Werkzeugunterteil, ein Werkzeugoberteil und eine Schäumkammer zwischen dem Werkzeugunterteil und dem Werkzeugoberteil, wobei das Werkzeugunterteil und das Werkzeugoberteil am Rand der Schäumkammer eine Schneidkante und eine Abstützfläche aufweisen, die in Öffnungsrichtung im wesentlichen übereinanderliegen und beim Öffnen nahe aneinander vorbeibewegt werden, um das geschäumte Bauteil randseitig zu beschneiden. Durch die Positionierung der Schneidkante zur Abstützfläche, insbesondere zu einem äußeren Rand der Abstützfläche, wird beim Öffnen des Schäumwerkzeugs eine Außenhaut abgeschert, die in die Schäumkammer, also in einen Hohlraum zwischen dem Werkzeugunterteil und dem Werkzeugoberteil, zuvor eingelegt und hinterschäumt wurde. Dabei entsteht ein geradliniger Schneidrand an der Außenhaut. Ein Beschneiden des Karosserieanbauteils nach dem Schäumen in einem separatem Arbeitsschritt entfällt somit, wodurch der Arbeitsaufwand verringert wird und ein kostengünstiges und einfach herzustellendes Karosseriebauteil gewährleistet ist.

Vorzugsweise hat eines der Werkzeugteile die Schneidkante, die an einem Fortsatz angeordnet ist.

Bevorzugt weist eines der Werkzeugteile einen Hinterschnitt auf, in den sich die Außenhaut bei geschlossenem Schäumwerkzeug bis zum Spalt erstreckt.

Vorzugsweise ist zwischen dem Werkzeugunterteil und dem Werkzeugoberteil ein Spalt gebildet, wobei die Außenhaut bei geschlossenem Schäumwerkzeug im Bereich des Spaltes geklemmt wird, wobei der Bereich des Spaltes zwei einander gegenüberliegende Flächen hat, die dieselbe Neigung aufweisen.

Eines der Werkzeugteile weist bevorzugt einen Schieber auf, der die Abstützfläche oder die Schneidkante aufweist, wobei der Schieber quer zur Öffnungsrichtung verschoben wird.

Weitere Merkmale und Vorteile der Erfindung ergeben sich aus der nachfolgenden Beschreibung und den Zeichnungen. Die Erfindung wird nachfolgend anhand der bevorzugten Ausführungsform beschrieben. In den Zeichnungen zeigen:
- Figur 1 eine perspektivische Ansicht eines Fahrzeugs mit einem Karosserieanbauteil in Form eines Dachmoduls das nach dem erfindungsgemäßen Verfahren hergestellt ist, wobei das erfindungsgemäße Schäumwerkzeug verwendet wird,
- Figur 2 eine Schnittansicht des Karosserieanbauteils entlang der Linie II-II in Figur 1,
- Figur 3 eine Schnittansicht durch das Karosserieanbauteil im erfindungsgemäßen Schäumwerkzeug, und
- Figur 4 einen vergrößerten Ausschnitt des mit X bezeichneten Bereichs in Figur 3.

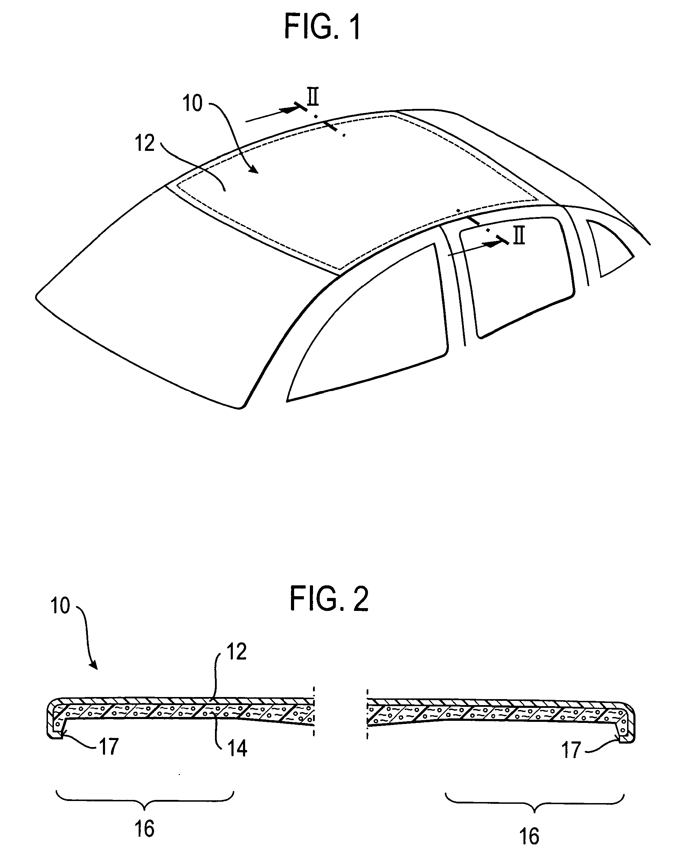

In Figur 1 ist ein geschäumtes Bauteil, genauer gesagt ein Karosserieanbauteil in Form eines Dachmoduls 10 gezeigt. Das Karosserieanbauteil könnte jedoch auch als Kotflügel, Tür oder Klappe (Motorhaube, Kofferraumdeckel) eines Fahrzeugs ausgebildet sein. Auch ein Innenraumverkleidungsteil könnte durch das nachfolgende Verfahren hergestellt werden.

Das Dachmodul 10 hat eine im montierten Zustand am Fahrzeug sichtbare Außenseite, die durch eine dünne, tiefgezogene Folienaußenhaut (Außenhaut 12) gebildet ist. Die Außenhaut 12 besteht aus Kunststoff oder Aluminium und ist vorzugsweise durchgefärbt bzw. beschichtet, um eine außenseitige Lackierung zu ersetzen.

Rückseitig unmittelbar an die Außenhaut 12 schließt eine durch Hinterschäumen oder Hinterspritzen der Außenhaut 12 gebildete Kunststoffschicht 14 an, die aus einem faserverstärkten PU-Schaum gebildet ist, wobei die Glasfasern durch das LFI-(Long Fiber Injection)Verfahren in den Schaum eingebracht werden und dabei die Kunststoffschicht 14 verstärken (Figur 2).

Die in Figur 2 gezeigte Kunststoffschicht 14 weist im mittleren Bereich eine größere Dicke auf als an den in Fahrzeuglängsrichtung betrachteten Randbereichen 16. Beide Seitenränder des Dachmoduls 10 stehen über die vom mittleren Bereich der Kunststoffschicht 14 gebildete Unterkante vor, wobei die Außenhaut 12 um die vorstehenden Seitenränder des Dachmoduls 10 gebogen ist. Ein Schneidrand der Außenhaut 12 ist mit dem Bezugszeichen 17 versehen.

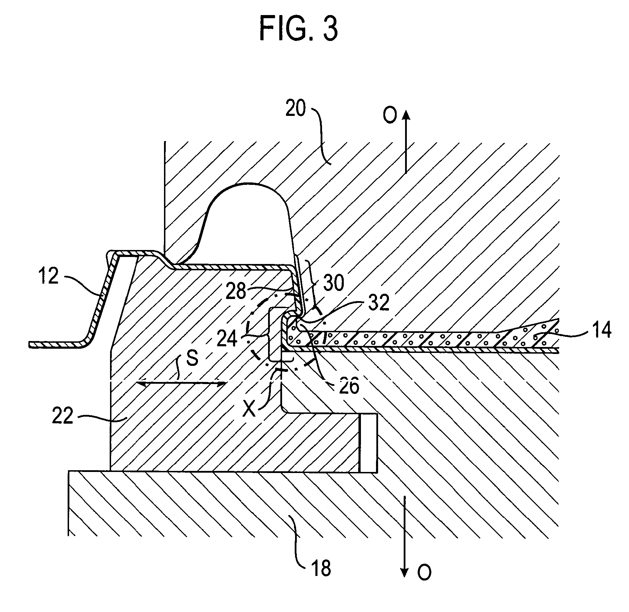

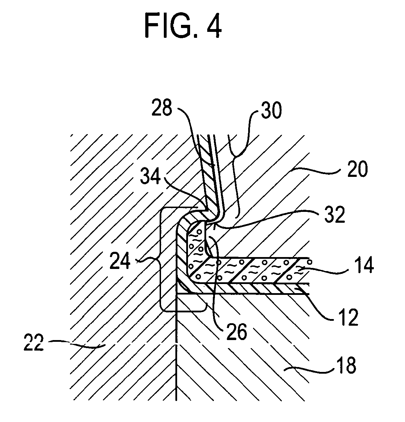

In den Figuren 3 und 4 ist das Schäumwerkzeug dargestellt, mit dessen Hilfe das Dachmodul 10 hergestellt wird. Das Schäumwerkzeug besteht aus einem Werkzeugunterteil 18 und einem Werkzeugoberteil 20.

Das Werkzeugunterteil 18 ist zweiteilig ausgebildet und hat einen Schieber 22. Die Öffnungsrichtung O des Werkzeugunterteils 18 und des Werkzeugoberteils 20 ist hier vertikal (gemäß Figur 3), während die Öffnungsrichtung des Schiebers 22 quer zur Öffnungsrichtung O des Schäumwerkzeugs also horizontal ist.

Die Außenhaut 12 lehnt sich an einen Hinterschnitt 24 des Schiebers 22 an und verläuft dann um einen Fortsatz 26 des Werkzeugoberteils 20 herum in einem Spalt 28 zwischen dem Schieber 22 und dem Werkzeugoberteil 20.

In einem Bereich des Spaltes 28 ist die Außenhaut 12 zwischen dem Schieber 22 und dem Werkzeugoberteil 20, die in diesem Bereich die gleiche Neigung haben, geklemmt.

Die Außenhaut 12 verläuft dann an einer Oberkante des Schiebers 22 entlang und ist zwischen dem Schieber 22 und dem Werkzeugoberteil 20 in einem Punkt geklemmt.

Der Fortsatz 26 am Werkzeugoberteil 20, der an den Hinterschnitt 24 des Schiebers 22 angrenzt, hat eine Schneidkante 32, die Teil eines auswechselbaren Schneideinsatzes ist. Es kann auch der Fortsatz 26 zusammen mit der Schneidkante 32 ausgewechselt werden. Über dem Fortsatz 26 (in Öffnungsrichtung O) liegt ein äußerer Rand einer Abstützfläche 34 des Schiebers 22, auf dessen Funktion im weiteren eingegangen wird.

Beim Herstellen des Dachmoduls 10 wird die vorgeformte Außenhaut 12 in das Werkzeugunterteil 18 bei nach außen gefahrenem Schieber 22 eingelegt, wobei die Außenhaut 12 an dem Werkzeugunterteil 18 anliegt. Anschließend wird flüssiges PU-Material rückseitig auf die Außenhaut 12 aufgebracht, wobei Glasfasern mit eingeschlossen werden (LFI-Verfahren). Das Werkzeugoberteil 20 wird nach unten gefahren und der Schieber 22 in die Schließposition nach innen gefahren. Das PU-Material schäumt aus und füllt eine sich zwischen dem Werkzeugunterteil 18 und dem Werkzeugoberteil 20 bildende Schäumkammer aus, die nach dem Schäumen die Kunststoffschicht 14 bildet.

Beim Öffnen des Werkzeugoberteils 20 in Öffnungsrichtung O, die in dieser Ausführungsform vertikal ist, wird die Außenhaut 12 in einem horizontal verlaufenden Abschnitt des Spaltes 28 durch die Schneidkante 32 beschnitten. Der Schieber 22 bleibt beim Öffnen des Werkzeugoberteils in Schließposition, so daß die Abstützfläche 34 am Schieber 22 in der Stellung bleibt und nicht "wegrutschen" kann, so daß ein geradliniger Schneidrand 17 entsteht. Da der Rand der Abstützfläche 34 über der Schneidkante 32 liegt und die Schneidkante 32 beim Öffnen nahe an dem Rand der Abstützfläche 34 vorbeibewegt wird, bleibt kein überschüssiges Material stehen, sondern es wird ein sauberer Schneidrand 17 erreicht, der nicht nachträglich bearbeitet werden muß.

Der Hinterschnitt 24 und der Fortsatz 26 sind hier so ausgebildet, daß nur eine definierte Menge an Schäummaterial in den Spalt 28 zwischen dem Fortsatz 26 und der Abstützfläche 34 gelangt. Beim Öffnen des Werkzeugoberteils 20 werden deshalb die Außenhaut 12 und das in den Spalt 28 gelangende Schäummaterial abgeschert. Das Schäummaterial in dem Spalt 28 ist nicht gezeigt.

Falls der Hinterschnitt 24 sich weiter nach oben (gemäß Figur 3) erstreckt, würde eine größere Menge von Schäummaterial, die die Kunststoffschicht 14 bildet, in den Raum zwischen Abstützfläche 34 und der Schneidkante 32 gelangen und die Kunststoffschicht 14 würde zusammen mit der Außenhaut 12 in einem Schritt abgeschert werden.

### Bezugszeichenliste

- 10:: Dachmodul
- 12:: Außenhaut
- 14:: Kunststoffschicht
- 16:: Randbereich
- 17:: Schnittkante
- 18:: Werkzeugunterteil
- 20:: Werkzeugoberteil
- 22:: Schieber
- 24:: Hinterschnitt
- 26:: Fortsatz
- 28:: Spalt
- 30:: Klemmabschnitt
- 32:: Schneidkante
- 34:: Abstützfläche

## Patentansprüche

1. Verfahren zum Herstellen eines geschäumten Bauteiles, insbesondere eines Karosserieanbauteils für ein Fahrzeug mittels der folgenden Schritte:
- Bereitstellen eines Schäumwerkzeugs mit einem Werkzeugunterteil (18) und einem Werkzeugoberteil (20),
- Einlegen einer Außenhaut (12) in das Werkzeugunterteil (18),
- Aufbringen eines schäumfähigen Materials, und
- Zusammenfahren des Schäumwerkzeugs, wobei sich wenigstens ein Abschnitt der Außenhaut (12) in einem Spalt (28) zwischen dem Werkzeugunterteil (18) und dem Werkzeugoberteil (20) befindet und die Außenhaut (12) nach dem Schäumvorgang beim Öffnen des Schäumwerkzeugs durch das Schäumwerkzeug selbst beschnitten wird.

2. Verfahren nach Anspruch 1, **dadurch gekennzeichnet, daß** das Werkzeugober- oder -unterteil (20) eine Schneidkante (32) aufweist, wobei die Außenhaut (12) durch diese Schneidkante (32) beschnitten wird.

3. Verfahren nach Anspruch 2, **dadurch gekennzeichnet, daß** die Schneidkante (32) auswechselbar ist.

4. Verfahren nach Anspruch 2 oder 3, **dadurch gekennzeichnet, daß** die Außenhaut (12) zwischen einer Abstützfläche (34) und der Schneidkante (32) beschnitten wird.

5. Verfahren nach Anspruch 4, **dadurch gekennzeichnet, daß** die Abstützfläche (34) auswechselbar ist.

6. Verfahren nach Anspruch 4 oder 5, **dadurch gekennzeichnet, daß** die Schneidkante (32) und ein äußerer Rand der Abstützfläche (34) im geschlossenen Zustand des Schäumwerkzeugs im wesentlichen in Öffnungsrichtung (O) übereinanderliegen.

7. Verfahren nach einem der vorhergehenden Ansprüche, **dadurch gekennzeichnet, daß** eines der Werkzeugteile einen Fortsatz (26) hat, um den der Abschnitt der Außenhaut (12) gelegt wird, der an einen Schneidrand (17) angrenzt, wobei der Schneidrand (17) beim Beschneiden der Außenhaut (12) erzeugt wird.

8. Verfahren nach Anspruch 7, **dadurch gekennzeichnet, daß** sich die Schneidkante (32) im Bereich des Fortsatzes (26) befindet.

9. Verfahren nach einem der Ansprüche 4 bis 8, **dadurch gekennzeichnet, daß** eines der Werkzeugteile einen Schieber (22) hat, der eine Abstützfläche (34) oder eine Schneidkante (32) aufweist, wobei der Schieber (22) beim Schäumvorgang quer zur Öffnungsrichtung (O) verschoben wird.

10. Verfahren nach einem der Ansprüche 7 bis 9, **dadurch gekennzeichnet, daß** eines der Werkzeugteile angrenzend an den Fortsatz (26) einen Hinterschnitt (24) aufweist, entlang dem sich die Außenhaut (12) bis zum Spalt (28) erstreckt.

11. Verfahren nach einem der vorhergehenden Ansprüche, **dadurch gekennzeichnet, daß** die Außenhaut (12) im Bereich des Spaltes (28) zwischen dem Werkzeugoberteil (20) und dem Werkzeugunterteil (18) geklemmt wird.

12. Schäumwerkzeug zur Anwendung des Verfahrens nach einem der Ansprüche 1 bis 11,
mit einem Werkzeugunterteil (18),
einem Werkzeugoberteil (20) und
einer Schäumkammer zwischen dem Werkzeugunterteil (18) und dem Werkzeugoberteil (20),
wobei das Werkzeugunterteil (18) und das Werkzeugoberteil (20) am Rand der Schäumkammer eine Schneidkante (32) und eine Abstützfläche (34) aufweisen, die in Öffnungsrichtung (O) im wesentlichen übereinanderliegen und beim Öffnen nahe aneinander vorbeibewegt werden, um das geschäumte Bauteil randseitig zu beschneiden.

13. Schäumwerkzeug nach Anspruch 12, **dadurch gekennzeichnet, daß** eines der Werkzeugteile die Schneidkante (32) aufweist, die an einem Fortsatz (26) angeordnet ist.

14. Schäumwerkzeug nach Anspruch 12 oder 13, **dadurch gekennzeichnet, daß** eines der Werkzeugteile randseitig einen Hinterschnitt (24) in der Schäumkammer aufweist, in den sich das geschäumte Bauteil bei geschlossenem Schäumwerkzeug erstreckt.

15. Schäumwerkzeug nach einem der Ansprüche 12 bis 14, **dadurch gekennzeichnet, daß** zwischen dem Werkzeugunterteil (18) und dem Werkzeugoberteil (20) ein Spalt (28) gebildet ist, wobei die Außenhaut (12) bei geschlossenem Schäumwerkzeug im Bereich des Spaltes (28) geklemmt wird, wobei der Bereich des Spaltes (28) zwei einander gegenüberliegende Flächen hat, die dieselbe Neigung aufweisen.

16. Schäumwerkzeug nach einem der Ansprüche 12 bis 15, **dadurch gekennzeichnet, daß** eines der Werkzeugteile einen Schieber (22) aufweist, der die Abstützfläche (34) oder die Schneidkante (32) aufweist, wobei der Schieber (22) quer zur Öffnungsrichtung (O) verschoben wird.
